# EUROPEAN PATENT SPECIFICATION

(11) **EP 2 929 703 B1**
(45) Date of publication and mention of the grant of the patent: **18.09.2019**
(21) Application number: 12889586.9
(22) Date of filing: 07.12.2012
(51) Int. Cl.: G06F 21/62, G06F 21/79, H04L 29/08, G06F 3/048

(54) **A MEMORY CARD AND A METHOD FOR ALLOWING ACCESS TO DIGITAL FILES STORED ON THE MEMORY CARD**
SPEICHERKARTE UND VERFAHREN ZUR ERMÖGLICHUNG DES ZUGRIFFS AUF DIGITALE, AUF DER SPEICHERKARTE GESPEICHERTE DATEIEN
CARTE MÉMOIRE ET PROCÉDÉ POUR PERMETTRE UN ACCÈS À DES FICHIERS NUMÉRIQUES STOCKÉS SUR LA CARTE MÉMOIRE

(43) Date of publication of application: 14.10.2015
(73) Proprietor: T-Data Systems (S) Pte Ltd, Singapore 456458 (SG)
(72) Inventor: TAN, Joon Yong, Wayne, Singapore 467953 (SG)
(74) Representative: Dehns
(86) International application number: PCT/SG2012/000458
(87) International publication number: WO 2014/088510

(56) References cited:
- EP-A2- 1 630 726
- WO-A1-2010/027327
- WO-A1-2011/108989
- WO-A2-03/088021
- CN-A- 102 625 019
- CN-A- 102 663 483
- US-A1- 2002 174 337
- US-A1- 2006 000 914
- US-A1- 2007 073 937
- US-A1- 2011 242 335

## Description

### FIELD OF INVENTION

The invention relates to a method for allowing access to digital files stored on a memory card and also to a memory card.

### BACKGROUND

Memory cards are currently a common storage medium for digital data captured using digital cameras. Some of these memory cards have wireless communications capabilities and allow both wireless reception and transmission of digital data.

Wireless communication devices typically communicate with the memory cards with wireless communications capabilities using "apps" running on the wireless communication devices. Without the "apps", the wireless communication devices are unable to access digital data stored on the memory cards.

Installation of the "apps" is an additional inconvenience for users, and some users are unable to use the "apps" as their wireless communication devices do not have compatible operating systems and/or the users do not wish to incur additional expenses to obtain the "apps". Furthermore, the "apps" may not be configured to enable all possible features of the memory card, and this may be frustrating to users.

The present invention aims to address the aforementioned issues of the preceding paragraphs.

### SUMMARY

There are currently no "apps" which allow a wireless communication device to have master control functionality over all other connected wireless devices.

In the present invention, there is provided a memory card capable of allowing a plurality of wireless communication devices to access digital files stored on the memory card. The memory card is configured to be electrically connected when inserted in a digital camera which has an inbuilt processor incapable of independently exporting digital files externally of the digital camera.

The memory card includes a central processor for controlling the memory card; a storage module for storing the digital files; and a wireless transceiver module being connected to both the central processor, and the storage module. It is preferable that the central processor is configured to provide a graphical user interface on a web browser on each of the plurality of wireless communication devices, and to receive instructions from a user using the graphical user interface on a first wireless communication device from amongst the plurality of wireless communication devices, whereby the instructions are for granting access to the digital files stored on the storage module by other wireless communication devices.

The first wireless communication device can be designated as a master device, the master device being either first to wirelessly communicate with the memory card, or first to be authenticated by the memory card. Authentication by the memory card includes use of for example, passwords, personal identification numbers, identification of a MAC address of the first wireless communication device which matches a pre-defined MAC addressed stored in the memory card and so forth.

The instructions can be either a first mode of selecting a plurality of the digital files stored on the storage module for viewing on the web browser on the other wireless communication devices or a second mode of selecting a plurality of the digital files stored on the storage module for viewing in a pre-determined order on the web browser on the other wireless communication devices. Furthermore, it is preferable that viewing of the digital files on the web browser of the other wireless communication devices occurs when the first wireless communication device ceases transmission of the instructions to the memory card.

It is preferable that selecting the plurality of the digital files stored on the storage module includes grouping the selected files in a list, the list being accessible to the other wireless communication devices, and the list being stored in a file format which is readable by the web browser of the other wireless communication devices.

In a second aspect, there is provided a method for allowing a plurality of wireless communication devices to access digital files stored on a storage module of a memory card. The memory card is configured to be electrically connected to a digital camera having an inbuilt processor incapable of independently exporting digital files externally of the digital camera.

The method includes providing a graphical user interface on a web browser on each of the plurality of wireless communication devices; and receiving instructions from a user using the graphical user interface on a first wireless communication device from amongst the plurality of wireless communication devices, the instructions being for granting access to the digital files stored on the storage module by other wireless communication devices.

The first wireless communication device can be designated as a master device, the master device being either first to wirelessly communicate with the memory card, or first to be authenticated by the memory card. Authentication by the memory card includes use of for example, passwords, personal identification numbers, identification of a MAC address of the first wireless communication device which matches a pre-defined MAC addressed stored in the memory card and so forth.

The instructions can be either a first mode of selecting a plurality of the digital files stored on the storage module for viewing on the web browser on the other wireless communication devices or a second mode of selecting a plurality of the digital files stored on the storage module for viewing in a pre-determined order on the web browser on the other wireless communication devices. Furthermore, it is preferable that viewing of the digital files on the web browser of the other wireless communication devices occurs when the first wireless communication device ceases transmission of the instructions to the memory card.

It is preferable that selecting the plurality of the digital files stored on the storage module includes grouping the selected files in a list, the list being accessible to the other wireless communication devices, and the list being stored in a file format which is readable by the web browser of the other wireless communication devices.

### DESCRIPTION OF FIGURES

In order that the present invention may be fully understood and readily put into practical effect, there shall now be described by way of non-limitative example only preferred embodiments of the present invention, the description being with reference to the accompanying illustrative figures.
Figure 1 shows a schematic diagram of a memory card of the present invention when in use.
Figure 2 shows a process flow of a method of the present invention.
Figure 3 shows a process flow of a first mode of the method of Figure 2.
Figure 4 shows a process flow of a second mode of the method of Figure 2.

### DESCRIPTION OF PREFERRED EMBODIMENTS

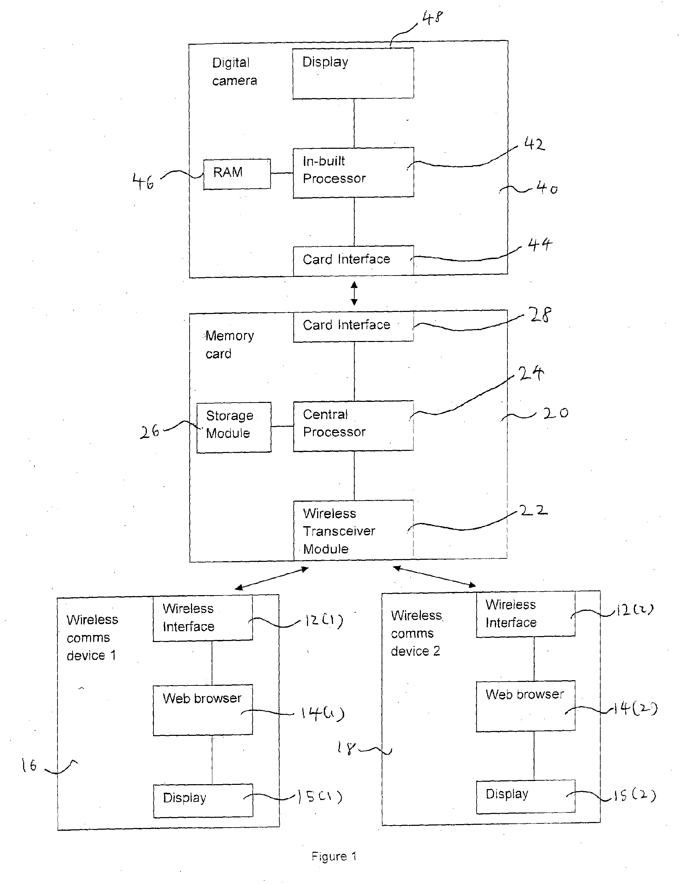

The present invention relates to a memory card which is able to provide a graphical user interface on a web browser of a wireless communications device, so as to allow digital files stored on the memory card to be accessed. A master device wirelessly connected to the memory card is able to control what digital files can be viewed on other wireless communications devices which are also connected to the memory card, and also what digital files are viewed in a pre-determined order on other wireless communications devices which are also connected to the memory card. The digital files in the following description can relate to, for example, image files, music files, video files, and so forth. Referring to Figure 1, there is shown a memory card 20 capable of allowing a plurality of wireless communication devices 16, 18 to access digital files stored on the memory card 20. The memory card 20 is configured to be electrically connected when inserted into a digital camera 40 having an in-built processor 42 incapable of independently exporting digital data externally of the digital camera 40. The digital camera 40 also includes RAM 46 and a display 48. The display 48 of the digital camera 40 may be a touch-sensitive panel and can be used to control the digital camera 40 via a graphical user interface shown on the display 48.

The memory card 20 includes a wireless transceiver module 22 being operably connected to a central processor 24, the central processor 24 being for controlling the memory card 20. The memory card also includes a storage module 26 for storing the digital files. The wireless transceiver module 22 is connected to both the central processor 24 and the storage module 26. The memory card 20 also includes a card interface 28 to communicate with the digital camera 40 card interface 44 such that the memory card 20 is able to operably connect to the digital camera 40. The memory card 20 is powered by the digital camera 40 when the memory card 20 is operably connected to the digital camera.

The plurality of wireless communication devices 16, 18 is able to communicate with the memory card 20 to access digital data stored on the memory card 20. An alphanumeric password may need to be input to the memory card 20 using each of the plurality of wireless communication devices 16, 18 in order to communicate with the memory card 20. Each of the wireless communication devices 16, 18 may be, for example, a mobile phone, a portable computer, a tablet computer and the like. Each of the wireless communications devices 16, 18 includes a wireless interface 12, a web browser 14 and a display 15. The web browser 14 is viewable using the display 15 of each of the wireless communications devices 16, 18. The display 15 may be a touch-sensitive panel.

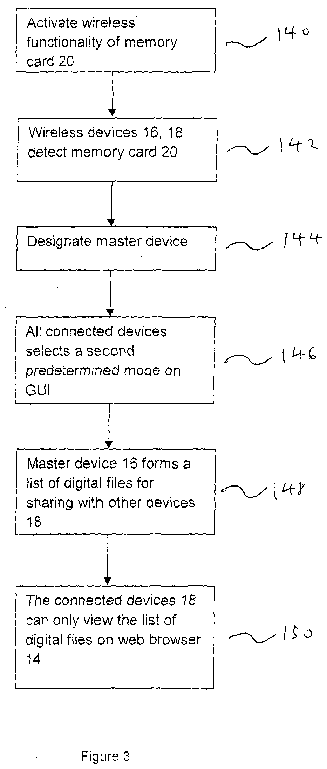

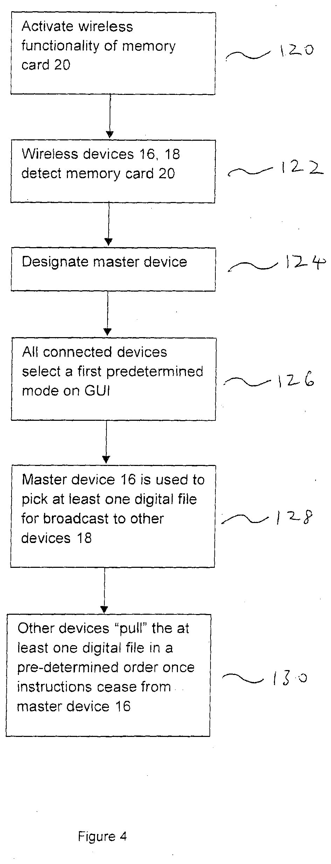

When the wireless communications devices 16, 18 are wirelessly connected to the memory card 20, the central processor 24 is configured to provide a graphical user interface on the web browser 14 on each of the plurality of wireless communication devices 16, 18. The central processor 24 is also configured to receive instructions from a user using the graphical user interface on a first wireless communication device 16, the instructions being for granting access to the digital files stored on the storage module 26 by other wireless communication devices 18. The instructions are a first mode of selecting a plurality of the digital files stored on the storage module 26 for viewing on the web browser 14 on the other wireless communication devices 18, or a second mode of selecting a plurality of the digital files stored on the storage module 26 for viewing in a pre-determined order on the web browser 14 on the other wireless communication devices 18. It should be appreciated that the pre-determined order for viewing the digital files can be conceived "on-the-fly" by the user of the first wireless communication device 16. Further details of the first and second modes will be provided when describing Figures 3 and 4.

The first wireless communication device 16 is designated as a master device, the master device being first from amongst the plurality of wireless communication devices 18 to wirelessly communicate with the memory card 20, and/or first from amongst the plurality of wireless communication devices 18 to be authenticated by the memory card 20. It should be appreciated that the first from amongst the plurality of wireless communication devices 18 to wirelessly communicate with the memory card 20 is used to mean at every instance that the memory card 20 is powered up. Authentication by the memory card 20 can be carried out using known techniques involving use of, for example, passwords, personal identification numbers, identification of a MAC address of the first wireless communication device 16 which matches a pre-defined MAC addressed stored in the memory card, and so forth.

When the user of the master device (first wireless communication device 16) selects at least one of the digital files stored on the storage module 26, the selected digital files are grouped in a list. Content in the list is accessible to the other wireless communication devices 18. The list can be stored in a file format which is readable by the web browser 14 of the other wireless communication devices 18. Viewing of the selected digital files on the web browser 14 on other wireless communication devices 18 occurs when the first wireless communication device 16 ceases transmission of the instructions to the memory card 20. This is so that the user of the master device (first wireless communication device 16) is able to carry out the intended task(s). It is possible to view the selected digital files on the web browser 14 on other wireless communication devices 18 before the first wireless communication device 16 ceases transmission of the instructions to the memory card 20 if the other wireless communication devices 18 are already able to access a prior list from the memory card 20.

It should be appreciated that content stored in the storage module 26 of the memory card 20 is accessible in a manner which is determined by the user of the master device. Thus, the user of the master device is able to control what digital files are viewable on the web browsers 14 of the other wireless communication devices 18 and can even control an order which the digital files are viewed on the web browsers 14 of the other wireless communication devices 18. The possibility to control what is viewable on the web browsers 14 of the other wireless communication devices 18 without installing "apps" in each wireless communication device and without having to alter an interface of the digital camera 40 is convenient.

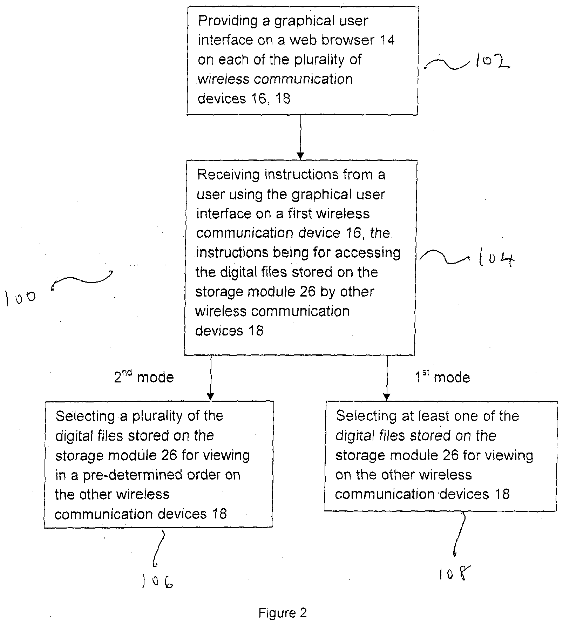

Referring to Figure 2, there is shown a method 100 for allowing a plurality of wireless communication devices 16, 18 to access digital files stored on a storage module 26 of a memory card 20 as described in the preceding paragraphs. An alphanumeric password may need to be input to the memory card 20 using each of the plurality of wireless communication devices 16, 18 in order to communicate with the memory card 20. The method 100 includes providing a graphical user interface on a web browser 14 on each of the plurality of wireless communication devices 16, 18 (102). Subsequently, the method 100 includes receiving instructions from a user using the graphical user interface on a first wireless communication device 16, the instructions being for accessing the digital files stored on the storage module 26 of the memory card 20 by other wireless communication devices 18 (104).

The instructions are either a first mode of selecting a plurality of the digital files stored on the storage module 26 for viewing in a pre-determined order on the web browser 14 on the other wireless communication devices 18 (108), or a second mode of selecting at least one of the digital files stored on the storage module 26 for viewing on the web browser 14 on the other wireless communication devices 18 (106). It should be appreciated that the pre-determined order for viewing the digital files can be conceived "on-the-fly" by the user of the first wireless communication device 16. Further details of the first and second modes will be provided when describing Figures 3 and 4.

The first wireless communication device 16 is designated as a master device, the master device being first from amongst the plurality of wireless communication devices 18 to wirelessly communicate with the memory card 20, and/or first from amongst the plurality of wireless communication devices 18 to be authenticated by the memory card 20. It should be appreciated that the first from amongst the plurality of wireless communication devices 18 to wirelessly communicate with the memory card 20 is used to mean at every instance that the memory card 20 is powered up. Authentication by the memory card 20 can be carried out using known techniques involving use of, for example, passwords, personal identification numbers, identification of a MAC address of the first wireless communication device 16 which matches a pre-defined MAC addressed stored in the memory card, and so forth.

In the method 100, when the user of the master device (first wireless communication device 16) selects at least one of the digital files stored on the storage module 26, the selected digital files are grouped in a list. The list can be stored in a file format which is readable by the web browser 14 of the other wireless communication devices 18. Content in the list is accessible to the other wireless communication devices 18. Viewing of the selected digital files on the web browser 14 on the other wireless communication devices 18 occurs when the first wireless communication device 16 ceases transmission of the instructions to the memory card. This is so that the user of the master device (first wireless communication device 16) is able to carry out the intended task(s). It is possible to view the selected digital files on the web browser 14 on other wireless communication devices 18 before the first wireless communication device 16 ceases transmission of the instructions to the memory card 20 if the other wireless communication devices 18 are already able to access a prior list from the memory card 20.

It should be appreciated that during use of the method 100, content stored in the storage module 26 of the memory card 20 is accessible in a manner which is determined by the user of the master device. Thus, the user of the master device is able to control what digital files are viewable on the web browsers 14 of the other wireless communication devices 18 and can even control an order which the digital files are viewed on the web browsers 14 of the other wireless communication devices 18. The possibility to control what is viewable on the web browsers 14 of the other wireless communication devices 18 without installing "apps" in each wireless communication device and without having to alter an interface of the digital camera 40 is convenient.

The first mode will now be described with reference to Figure 3. The first mode relates to selecting at least one of the digital files stored on the storage module 26 for viewing on the web browser 14 on the other wireless communication devices 18. Firstly, a wireless functionality of the memory card 20 is activated (140). Wireless communication devices 16, 18 then detect the memory card 20 (142). An alphanumeric password may need to be input to the memory card 20 using each of the plurality of wireless communication devices 16, 18 in order to communicate with the memory card 20.

A master device is then designated amongst connected wireless communication devices 16, 18 (144). The master device 16 is either first to wirelessly communicate with the memory card 20, or first to be authenticated by the memory card 20. Authentication by the memory card 20 can be carried out using known techniques involving use of, for example, passwords, personal identification numbers, identification of a MAC address of the first wireless communication device 16 which matches a pre-defined MAC addressed stored in the memory card, and so forth.

All connected wireless communication devices 16, 18 then selects a second pre-determined mode on a graphical user interface viewable on a web browser 14 of the connected wireless communication devices 16, 18 (146). Subsequently, the master device 16 is used to pick at least one digital file from the storage module 26 in the memory card 20, the picked digital files forming a list for sharing with other wireless communication devices 18 (148). The other wireless communication devices 18 can then view the list of digital files on the web browser 14 once instructions cease transmitting from the master device 16 (150). It is possible to view the selected digital files on the web browser 14 on other wireless communication devices 18 before the first wireless communication device 16 ceases transmission of the instructions to the memory card 20 if the other wireless communication devices 18 are already able to access a prior list from the memory card 20.

The second mode will now be described with reference to Figure 4. The second mode relates to selecting a plurality of the digital files stored on the storage module for viewing in a pre-determined order on the web browser 14 on the other wireless communication devices 18. Firstly, a wireless functionality of the memory card 20 is activated (120). Wireless communication devices 16, 18 then detect the memory card 20 (122). An alphanumeric password may need to be input to the memory card 20 using each of the plurality of wireless communication devices 16, 18 in order to communicate with the memory card 20.

A master device is then designated amongst connected wireless communication devices 16, 18 (124). The master device 16 is either first to wirelessly communicate with the memory card 20, or first to be authenticated by the memory card 20. Authentication by the memory card 20 can be carried out using known techniques involving use of, for example, passwords, personal identification numbers, identification of a MAC address of the first wireless communication device 16 which matches a pre-defined MAC addressed stored in the memory card, and so forth.

All connected wireless communication devices 16, 18 then selects a first pre-determined mode on a graphical user interface viewable on a web browser 14 of the connected wireless communication devices 16, 18 (126). Subsequently, the master device 16 is used to pick at least one digital file from the storage module 26 in the memory card 20 for broadcast to other wireless communication devices 18 (128). The other wireless communication devices 18 then "pull" the at least one digital file once instructions cease transmitting from the master device 16 (130).

Whilst there has been described in the foregoing description preferred embodiments of the present invention, it will be understood by those skilled in the technology concerned that many variations or modifications in details of design or construction may be made without departing from the present invention as defined by the appended claims.

## Claims

1. A memory card (20) capable of allowing a plurality of wireless communication devices (16,18) to access digital files stored on the memory card (20), the memory card (20) being configured to be electrically connected when inserted in a digital camera (40) having an inbuilt processor (42) incapable of independently exporting digital files externally of the digital camera (40), the memory card (20) including:
a central processor (24) for controlling the memory card (20);
a storage module (26) for storing the digital files; and
a wireless transceiver module (22) being connected to both the central processor (24), and the storage module (26),
wherein the central processor (24) is configured to provide a graphical user interface on a web browser (14) on each of the plurality of wireless communication devices (16,18), and to receive instructions from a user using the graphical user interface on a first wireless communication device (16) from amongst the plurality of wireless communication devices, the instructions being for granting access to the digital files stored on the storage module (26) by other wireless communication devices (18).

2. The memory card (20) of claim 1 , wherein the first wireless communication device (16) is designated as a master device, the master device being either first from amongst the plurality of wireless communication devices to wirelessly communicate with the memory card (20), or first from amongst the plurality of wireless communication devices to be authenticated by the memory card (20).

3. The memory card (20) of claim 2, wherein authentication by the memory card (20) includes use of at least one of: passwords, personal identification numbers, and identification of a MAC address of the first wireless communication device which matches a pre-defined MAC addressed stored in the memory card.

4. The memory card (20) of any one of claims 1 to 3, wherein the instructions are a first mode of selecting a plurality of the digital files stored on the storage module (26) for viewing on the web browser (14) on the other wireless communication devices.

5. The memory card (20) of any one of claims 1 to 3, wherein the instructions are a second mode of selecting a plurality of the digital files stored on the storage module (26) for viewing in a pre-determined order on the web browser (14) on the other wireless communication devices.

6. The memory card (20) of either claim 4 or 5, wherein selecting the plurality of the digital files stored on the storage module (26) includes grouping the selected files in a list, the list being accessible to the other wireless communication devices.

7. The memory card (20) of claim 6, wherein the list is stored in a file format which is readable by the web browser (14) of the other wireless communication devices.

8. The memory card (20) of either claim 4 or 5, wherein viewing of the digital files on the web browser (14) of the other wireless communication devices occurs when the first wireless communication device (16) ceases transmission of the instructions to the memory card (20).

9. A method (100) for allowing a plurality of wireless communication devices (16,18) to access digital files stored on a storage module (26) of a memory card (20), the memory card (20) being configured to be electrically connected to a digital camera (40) having an inbuilt processor (42) incapable of independently exporting digital files externally of the digital camera (40), the method including:
providing a graphical user interface on a web browser (14) on each of the plurality of wireless communication devices (16,18); and
receiving instructions from a user using the graphical user interface on a first wireless communication device from amongst the plurality of wireless communication devices, the instructions being for granting access to the digital files stored on the storage module by other wireless communication devices.

10. The method (100) of claim 9, wherein the first (16) from amongst the plurality of wireless communication devices is designated as a master device, the master device being either first from amongst the plurality of wireless communication devices (16,18) to wirelessly communicate with the memory card (20), or first from amongst the plurality of wireless communication devices (16,18) to be authenticated by the memory card (20).

11. The method (100) of claim 10, wherein authentication by the memory card (20) includes use of at least one of: passwords, personal identification numbers, and identification of a MAC address of the first wireless communication device (16) which matches a pre-defined MAC addressed stored in the memory card.

12. The method (100) of any one of claims 9 to 11 , wherein the instructions are a first mode of selecting a plurality of the digital files stored on the storage module (26) for viewing on the web browser (14) on the other wireless communication devices, or wherein the instructions are a second mode of selecting a plurality of the digital files stored on the storage module (26) for viewing in a pre-determined order on the web browser (14) on the other wireless communication devices.

13. The method (100) of claim 12, wherein selecting at least one of the digital files stored on the storage module (26) includes grouping the selected files in a list, the list being accessible to the other wireless communication devices.

14. The method (100) of claim 13, wherein the list is stored in a file format which is readable by the web browser (14) of the other wireless communication devices.

15. The method (100) of claim 12, wherein viewing of the digital files on the web browser (14) on the other wireless communication devices occurs when the first wireless communication device (16) ceases transmission of the instructions to the memory card (20).

## Patentansprüche

1. Eine Speicherkarte (20), die mehrere drahtlose Verbindungen zulassen kann Kommunikationsgeräte (16, 18) für den Zugriff auf auf der Speicherkarte gespeicherte digitale Dateien
(20), wobei die Speicherkarte (20) konfiguriert ist, um elektrisch verbunden zu werden, wenn eingesetzt in eine Digitalkamera (40) mit einem eingebauten Prozessor (42), der nicht in der Lage ist,
selbständiges Exportieren digitaler Dateien außerhalb der Digitalkamera (40), die Speicherkarte (20) mit:
einen Zentralprozessor (24) zum Steuern der Speicherkarte (20);
ein Speichermodul (26) zum Speichern der digitalen Dateien; und
ein drahtloses Transceivermodul (22), das mit beiden Zentralen verbunden ist Prozessor (24) und Speichermodul (26),
wobei der Zentralprozessor (24) konfiguriert ist, um einen grafischen Benutzer bereitzustellen
Schnittstelle in einem Webbrowser (14) in jeder der Vielzahl von drahtlosen Kommunikationen
Geräte (16, 18) und um Anweisungen von einem Benutzer zu erhalten, der den grafischen Benutzer verwendet
Schnittstelle an einem ersten drahtlosen Kommunikationsgerät (16) aus der Vielzahl von drahtlose Kommunikationsgeräte, wobei die Anweisungen für die Gewährung des Zugriffs auf das Internet gelten
digitale Dateien, die auf dem Speichermodul (26) durch andere drahtlose Kommunikation gespeichert sind
Geräte (18).

2. Speicherkarte (20) nach Anspruch 1, bei der die erste drahtlose Kommunikation erfolgt Gerät (16) wird als Master-Gerät bezeichnet, wobei das Master-Gerät eines der ersten ist aus der Vielzahl von drahtlosen Kommunikationsgeräten drahtlos
mit der Speicherkarte (20) kommunizieren oder zuerst aus der Vielzahl von
Von der Speicherkarte (20) zu authentifizierende drahtlose Kommunikationsgeräte.

3. Speicherkarte (20) nach Anspruch 2, wobei die Authentifizierung durch den Speicher erfolgt
Die Karte (20) beinhaltet die Verwendung von mindestens einem der folgenden Merkmale:
Passwort, persönliche Identifikation
Nummern und Identifizierung einer MAC-Adresse der ersten drahtlosen Kommunikation
Gerät, das mit einer vordefinierten MAC-Adresse übereinstimmt, die auf der Speicherkarte gespeichert ist.

4. Speicherkarte (20) nach einem der Ansprüche 1 bis 3, wobei die Anweisungen sind ein erster Modus zum Auswählen einer Vielzahl der in dem Speicher gespeicherten digitalen Dateien
Modul (26) zur Anzeige im Webbrowser (14) auf den anderen drahtlosen Kommunikationsgeräten.

5. Speicherkarte (20) nach einem der Ansprüche 1 bis 3, wobei die Anweisungen a zweiter Modus zum Auswählen einer Vielzahl der auf dem Speichermodul gespeicherten digitalen Dateien
(26) zum Betrachten in einer vorgegebenen Reihenfolge im Webbrowser (14) auf der anderen Seite
drahtlose Kommunikationsgeräte

6. Speicherkarte (20) nach Anspruch 4 oder 5, wobei die Vielzahl ausgewählt wird der auf dem Speichermodul (26) gespeicherten digitalen Dateien umfasst das Gruppieren der ausgewählten
Dateien in einer Liste, auf die die anderen drahtlosen Kommunikationsgeräte zugreifen können.

7. Speicherkarte (20) nach Anspruch 6, wobei die Liste in einem Dateiformat gespeichert ist die von dem Webbrowser (14) der anderen drahtlosen Kommunikation lesbar ist Geräte.

8. Speicherkarte (20) nach Anspruch 4 oder 5, wobei das Digital betrachtet wird Dateien im Webbrowser (14) der anderen drahtlosen Kommunikationsgeräte auftreten wenn das erste drahtlose Kommunikationsgerät (16) die Übertragung des Anweisungen zur Speicherkarte (20).

9. Verfahren (100) zum Zulassen einer Vielzahl von drahtlosen Kommunikationsgeräten (16,18), um auf digitale Dateien zuzugreifen, die auf einem Speichermodul (26) einer Speicherkarte gespeichert sind
(20), wobei die Speicherkarte (20) konfiguriert ist, um elektrisch mit einem Digital verbunden zu werden
Kamera (40) mit einem eingebauten Prozessor (42), der nicht in der Lage ist, unabhängig zu exportieren
Digitaldateien außerhalb der Digitalkamera (40), wobei das Verfahren umfasst:
Bereitstellen einer grafischen Benutzeroberfläche in einem Webbrowser (14) auf jedem der mehrere drahtlose Kommunikationsvorrichtungen (16, 18); und
Empfangen von Anweisungen von einem Benutzer unter Verwendung der grafischen Benutzeroberfläche als erstes
drahtloses Kommunikationsgerät aus der Vielzahl von drahtlosen
Kommunikationsgeräte, wobei die Anweisungen zum Gewähren des Zugriffs auf die digitalen Dateien dienen
auf dem Speichermodul von anderen drahtlosen Kommunikationsgeräten gespeichert.

10. Verfahren (100) nach Anspruch 9, wobei das erste (16) aus dem
Eine Vielzahl von drahtlosen Kommunikationsgeräten wird als Master-Gerät bezeichnet, das Master-Gerät ist entweder das erste aus der Vielzahl von drahtlosen
Kommunikationsgeräte (16, 18) zur drahtlosen Kommunikation mit der Speicherkarte (20) oder als erstes aus der Vielzahl von drahtlosen Kommunikationsgeräten (16, 18) durch die Speicherkarte (20) authentifiziert werden.

11. Verfahren (100) nach Anspruch 10, wobei die Authentifizierung durch die Speicherkarte erfolgt
(20) umfasst die Verwendung von mindestens einem der folgenden Elemente: Passwörter, persönliche Identifikationsnummern,
und Identifizierung einer MAC-Adresse des ersten drahtlosen Kommunikationsgeräts (16) Dies entspricht einer vordefinierten MAC-Adresse, die auf der Speicherkarte gespeichert ist.

12. Verfahren (100) nach einem der Ansprüche 9 bis 11, wobei die Anweisungen sind einen ersten Modus zum Auswählen einer Vielzahl der auf dem Speichermodul gespeicherten digitalen Dateien
(26) zur Anzeige im Webbrowser (14) bei der anderen drahtlosen Kommunikation Vorrichtungen, oder wobei die Anweisungen ein zweiter Modus zum Auswählen einer Mehrzahl von sind
die auf dem Speichermodul (26) gespeicherten digitalen Dateien zur Ansicht in einem vorgegebenen Format
Bestellen Sie im Webbrowser (14) die anderen drahtlosen Kommunikationsgeräte.

13. Verfahren (100) nach Anspruch 12, wobei mindestens eines der digitalen ausgewählt wird Dateien, die in dem Speichermodul (26) gespeichert sind, umfassen das Gruppieren der ausgewählten Dateien in einer Liste,
Die Liste ist für die anderen drahtlosen Kommunikationsgeräte zugänglich.

14. Verfahren (100) nach Anspruch 13, wobei die Liste in einem Dateiformat gespeichert wird, welches
ist für den Webbrowser (14) der anderen drahtlosen Kommunikationsgeräte lesbar.

15. Verfahren (100) nach Anspruch 12, wobei die digitalen Dateien im Web angezeigt werden Browser (14) auf den anderen drahtlosen Kommunikationsgeräten tritt beim ersten auf Das drahtlose Kommunikationsgerät (16) beendet die Übertragung der Anweisungen an das Speicherkarte (20).

## Revendications

1. Une carte mémoire (20) capable de permettre plusieurs communications sans fil des dispositifs de communication (16, 18) pour accéder à des fichiers numériques stockés sur la carte mémoire (20), la carte mémoire (20) étant configurée pour être connectée électriquement inséré dans un appareil photo numérique (40) ayant un processeur intégré (42) incapable deexporter indépendamment des fichiers numériques à l'extérieur de l'appareil photo numérique (40), carte mémoire (20) comprenant:
un processeur central (24) pour commander la carte mémoire (20);
un module de stockage (26) pour stocker les fichiers numériques; et
un module émetteur-récepteur sans fil (22) étant connecté à la fois au central processeur (24) et le module de stockage (26),
dans lequel le processeur central (24) est configuré pour fournir un utilisateur graphique interface sur un navigateur Web (14) sur chacune de la pluralité de communications sans fil dispositifs (16, 18), et pour recevoir des instructions d'un utilisateur utilisant l'utilisateur graphique
interface sur un premier dispositif de communication sans fil (16) parmi la pluralité de dispositifs de communication sans fil, les instructions permettant d'accorder l'accès au fichiers numériques stockés sur le module de stockage (26) par une autre communication sans filappareils (18).

2. Carte mémoire (20) selon la revendication 1, dans laquelle la première communication sans fildispositif (16) est désigné comme dispositif maître, le dispositif maître étant soit le premierparmi la pluralité de dispositifs de communication sans fil à sans fil communiquer avec la carte mémoire (20) ou d'abord parmi la pluralité de les dispositifs de communication sans fil doivent être authentifiés par la carte mémoire (20).

3. Carte mémoire (20) selon la revendication 2, dans laquelle l'authentification par la mémoire la carte (20) comprend l'utilisation d'au moins un des éléments suivants: mots de passe, identification personnelle numéros et identification d'une adresse MAC de la première communication sans filappareil qui correspond à une adresse MAC prédéfinie enregistrée sur la carte mémoire.

4. Carte mémoire (20) selon l'une quelconque des revendications 1 à 3, dans laquelle les instructions sont un premier mode de sélection d'une pluralité de fichiers numériques stockés dans la mémoire module (26) destiné à être visualisé sur le navigateur Web (14) sur les autres dispositifs de communication sans fil.

5. Carte mémoire (20) selon l'une quelconque des revendications 1 à 3, dans laquelle les instructions sont un deuxième mode de sélection d'une pluralité de fichiers numériques stockés sur le module de stockage (26) pour la visualisation dans un ordre prédéterminé sur le navigateur Web (14) de l'autre dispositifs de communication sans fil

6. Carte mémoire (20) selon la revendication 4 ou 5, dans laquelle la sélection de la pluralité des fichiers numériques stockés sur le module de stockage (26) comprend le regroupement des fichiers dans une liste, la liste étant accessible aux autres dispositifs de communication sans fil.

7. Carte mémoire (20) selon la revendication 6, dans laquelle la liste est stockée dans un format de fichier.lisible par le navigateur Web (14) de l'autre système de communication sans fil dispositifs.

8. Carte mémoire (20) selon la revendication 4 ou 5, dans laquelle la visualisation de la des fichiers sur le navigateur Web (14) des autres dispositifs de communication sans fil apparaissentlorsque le premier dispositif de communication sans fil (16) cesse de transmettre le message instructions sur la carte mémoire (20).

9. Procédé (100) permettant à une pluralité de dispositifs de communication sans fil (16, 18) pour accéder à des fichiers numériques stockés sur un module de stockage (26) d'une carte mémoire (20), la carte mémoire (20) étant configurée pour être connectée électriquement à un réseau numérique.
appareil photo (40) ayant un processeur intégré (42) incapable d'exporter indépendamment des fichiers numériques externes à l'appareil photo numérique (40), le procédé comprenant:
fournir une interface utilisateur graphique sur un navigateur Web (14) sur chacun des une pluralité de dispositifs de communication sans fil (16, 18); et
recevoir des instructions d'un utilisateur à l'aide de l'interface utilisateur graphique sur une première dispositif de communication sans fil parmi la pluralité de services sans fil dispositifs de communication, les instructions étant pour donner accès aux fichiers numériques
stockés sur le module de stockage par d'autres dispositifs de communication sans fil.

10. Procédé (100) selon la revendication 9, dans lequel le premier (16) parmi les plusieurs dispositifs de communication sans fil est désigné comme appareil maître, le le dispositif maître étant soit le premier parmi la pluralité de systèmes sans fil des dispositifs de communication (16, 18) pour communiquer sans fil avec la carte mémoire (20) ou le premier parmi la pluralité de dispositifs de communication sans fil (16, 18) être authentifié par la carte mémoire (20).

11. Procédé (100) selon la revendication 10, dans lequel l'authentification par la carte mémoire (20) inclut l'utilisation d'au moins un des éléments suivants: mots de passe, numéros d'identification personnels, et identification d'une adresse MAC du premier dispositif de communication sans fil (16) qui correspond à une adresse MAC prédéfinie enregistrée sur la carte mémoire.

12. Procédé (100) selon l'une quelconque des revendications 9 à 11, dans lequel les instructions sont un premier mode de sélection d'une pluralité de fichiers numériques stockés sur le module de stockage (26) pour l'affichage sur le navigateur Web (14) sur l'autre communication sans fil dispositifs, ou dans lequel les instructions sont un second mode de sélection d'une pluralité deles fichiers numériques stockés sur le module de stockage (26) pour une visualisation dans unecommandez sur le navigateur Web (14) sur les autres dispositifs de communication sans fil.

13. Procédé (100) selon la revendication 12, dans lequel on sélectionne au moins l'un des les fichiers stockés sur le module de stockage (26) comprennent le regroupement des fichiers sélectionnés dans une liste,la liste étant accessible aux autres dispositifs de communication sans fil.

14. Procédé (100) selon la revendication 13, dans lequel la liste est stockée dans un format de fichier qui est lisible par le navigateur Web (14) des autres dispositifs de communication sans fil.

15. Procédé (100) selon la revendication 12, dans lequel la visualisation des fichiers numériques sur le Web
navigateur (14) sur les autres dispositifs de communication sans fil se produit lorsque le premierdispositif de communication sans fil (16) cesse la transmission des instructions au carte mémoire (20).
